# EUROPÄISCHE PATENTSCHRIFT

(11) **EP 2 312 953 B1**
(45) Veröffentlichungstag und Bekanntmachung des Hinweises auf die Patenterteilung: **03.12.2014**
(21) Anmeldenummer: 09781061.8
(22) Anmeldetag: 24.07.2009
(51) Int. Cl.: A21B 3/04, A21B 1/26

(54) **BACKOFEN MIT SCHWADENAPPARAT**
OVEN WITH A STEAM SYSTEM
FOUR BOULANGERIE AVEC APPAREIL À BUÉES

(30) Priorität: 29.07.2008 DE 102008035394
(43) Veröffentlichungstag der Anmeldung: 27.04.2011
(73) Patentinhaber: MIWE Michael Wenz GmbH, 97450 Arnstein (DE)
(72) Erfinder: KOOS, Michael, 97450 Arnstein (DE)
(74) Vertreter: Freischem, Stephan
(86) Internationale Anmeldenummer: PCT/EP2009/059590
(87) Internationale Veröffentlichungsnummer: WO 2010/012663

(56) Entgegenhaltungen:
- WO-A2-02/089588
- DE-A1- 3 208 223
- DE-A1-102006 044 593
- US-A- 4 984 557
- US-A- 5 653 164

## Beschreibung

### Technisches Gebiet

Die Erfindung betrifft einen Backofen gemäß dem Oberbegriff des Patentanspruchs 1.

### Stand der Technik

Ein Backofen mit Schwadenapparat ist beispielsweise bekannt aus der Druckschrift DE 10 2006 044 593 A1. Bei diesem Backofen ist das Gebläse oberhalb der Deckwand des Backraums angeordnet. Es saugt das Heizmedium nach Durchströmen des Backraums durch diese Deckwand ab und fördert es zu einem Heizregister. Die Luft strömt von dem Gebläse durch einen horizontalen Strömungskanal oder einen vertikalen Strömungskanal zum Heizregister, welches in dem vertikalen Strömungskanal angeordnet ist. Anschließend strömt die Luft durch einen Schwadenapparat 20, der eine Vielzahl übereinander angeordneter Schwadeneisen aufweist. Durch Ausströmöffnungen in einer Seitenwand des Backraums strömt die Luft, welche durch Spalte zwischen übereinanderliegenden Schwadeneisen hindurchgetreten ist, in den Backraum ein. Diese Konstruktion hat sich als wirkungsvoll und zuverlässig erwiesen. Die Anordnung des Schwadenapparats direkt neben dem Heizregister und dem unter dem Heizregister liegenden Brenner sorgt für eine gute Wärmeübertragung der Hitze des Brenners auf den Schwadenapparat.

Dagegen kann sich bei längerem Betrieb des Schwadenapparats ein Problem ergeben. Das Heizmedium (üblicherweise erhitzte Luft) strömt durch Lufteinstellbleche, die direkt vor den Schwadeneisen angeordnet sind, sowie durch die übereinander mit Abständen zueinander angeordneten Schwadeneisen selbst. Die Spalte zwischen den Lufteinstellblechen sind relativ eng bemessen. Bei einer Beschwadung des Backraums, d.h. bei dem Zuleiten eines Schwadens von Wasserdampf, wird Wasser in den Schwadenapparat eingesprüht, das bei Kontakt mit den Schwadeneisen verdampft. Das verdampfende Wasser erzeugt an den Schwadeneisen und an den Lufteinstellblechen Kalkablagerungen und andere Rückstände. Diese Rückstände können insbesondere die Spalte zwischen den Lufteinstellblechen verkleinern. Dies kann dazu führen, dass im Bereich verkleinerter Spalte die Menge der durchströmenden Luft reduziert ist. Wenn beispielsweise im Bereich der oberen Schwadeneisen die Spalte durch Ablagerungen eine reduzierte Breite aufweisen, kann die Menge der durchströmenden Luft hier kleiner sein als in anderen Bereichen, und die Wärmeübertragung auf Backwaren ist hier weniger effektiv. Daraus kann sich ein unregelmäßiges Backergebnis ergeben. In der Praxis müssen die Schwadenapparate regelmäßig gewartet und gesäubert und gegebenenfalls erneuert werden, um derartige unregelmäßige Backergebnisse zuverlässig zu vermeiden.

Es ist zwar aus dem Stand der Technik bekannt, Schwadenapparate z.B. bei Thermoölöfen vollständig außerhalb des Ofens (beispielsweise oben auf dem Ofengehäuse als separate Baueinheit) vorzusehen. Ein in dem Ofengehäuse vorgesehener Schwadenapparat wurde bei dem Stand der Technik aber meist im Strömungsweg des Heizmediums angeordnet, um eine zuverlässige Erhitzung der Schwadeneisen zu gewährleisten.

Aus der Druckschrift AT 383 471 B ist ein Backofen bekannt, bei dem beiderseits des Backraums im unteren Bereich Beschwadungsvorrichtungen untergebracht sind. Die Druckschrift DE 200 03 484 U1 zeigt einen fremdbeheizten Dampfgenerator, der außerhalb des Backraums angeordnet ist. Die aus der PCT-Anmeldung WO 87/06101 abgeleitete Druckschrift US 4,984,557 offenbart einen Backofen mit den Merkmalen des Oberbegriffs des Patentanspruchs 1. Hier ist der Schwadenapparat im Rückströmkanal angeordnet, durch den die Luft zu einer Heizung und zur Saugseite des Gebläses strömt. Der Schwadenapparat grenzt an eine Schwadenheizung, die von einem in der Seitenwand des Rückströmkanals verlaufenden Rauchgaskanal gebildet wird. Der befeuchtete Luftstrom trifft unmittelbar hinter dem Schwadenapparat auf die Heizelemente der Heizung und dann auf die Anströmkanten der Rotorblätter des Gebläses, so dass sich hier Kalkablagerungen bilden können. Die Druckschrift DE 32 08 223 A1 zeigt einen Backofen, in dessen Backraum Heizflächen angeordnet sind, die sich über die gesamte Backraumhöhe, die Backraumrückwand und die Backraumseiten erstrecken und an beiden Seiten einen Abstand von der Backofenwand zur Bildung eines Umwälzwegs aufweisen. Die Heizflächen werden von innen durch die Abgase eines Brenners beheizt. Ein Schwadenapparat ist innerhalb des Backraums aufgestellt, und zwar mit seiner Rückseite an der Heizfläche. Er wird somit von den heißen Abgasen beheizt.

### Darstellung der Erfindung

Aufgabe der Erfindung ist es, einen gattungsgemäßen Backofen derart fortzubilden, dass die thermische Energie im Backraum besser genutzt wird.

Diese Aufgabe wird erfindungsgemäß durch die Gesamtheit der Merkmale des Patentanspruchs 1 gelöst.

Bei der Anordnung des Schwadenapparats außerhalb des Strömungswegs des Heizmediums müssen andere Maßnahmen zur Erhitzung des Schwadenapparats vorgesehen werden. Der Schwadenapparat und insbesondere Ablagerungen am Schwadenapparat haben aber keinen Einfluss mehr auf die Strömung des Heizmediums und folglich auf die Wärmeübertragung von der Heizvorrichtung des Backofens auf die Backwaren im Backraum.

Der Schwadenapparat grenzt an eine Schwadenheizung an, die von mindestens einem Abgaskanal in der Rückwand des Backofens gebildet wird, der das Abgas eines Brenners aus dem Ofengehäuse leiten. Ähnlich der Ausführungsform des Standes der Technik wird der Backofen vorzugsweise durch einen Ölbrenner oder Gasbrenner beheizt. Über das Heizregister wird der größte Teil der Heizenergie des Brenners auf das Heizmedium in dem Ofen übertragen. Das Abgas des Brenners hat aber beim Eintritt in den Abgaskanal noch eine erhebliche Temperatur. Dadurch, dass der Abgaskanal als Schwadenheizung an den Schwadenapparat angrenzend angeordnet wird, kann die in dem Abgas verbleibende thermische Energie auf den Schwadenapparat, insbesondere Schwadeneisen des Schwadenapparats übertragen werden.

Das Heizmedium strömt durch eine den Backraum begrenzende Seitenwand in den Backraum ein und der Schwadenapparat ist an der Rückwand des Backofens angeordnet. Die Anordnung des Gebläses, des Heizregisters und des Brenners kann folglich unverändert bleiben. Der Schwadenapparat wird gegenüber dem vorbekannten Stand der Technik lediglich von der Seitenwand, durch die das Heizmedium einströmt, entfernt und zur Rückwand des Backofens verlagert.

In der Praxis kann in der Rückwand des Backraums ein U-förmiger Abgaskanal angeordnet sein, der sich über den größten Teil der Breite der Rückwand erstreckt. Die Schwadeneisen des Schwadenapparats können sich über die Breite des U-förmigen Abgaskanals erstrecken. Sie werden dann über ihre gesamte Erstreckung durch das Abgas in dem Abgaskanal erhitzt.

Im Bereich der den Backraum begrenzenden Seitenwand kann zusätzlich eine Mehrzahl von Wärmespeicherelementen angeordnet sein. Die Wärmespeicherelemente sind vorzugsweise Schamottsteine. Mehrere Schamottsteine erstrecken sich vorzugsweise über die gesamte Breite der Seitenwand des Backraums. Zwischen übereinanderliegenden Schamottsteinen ist ein Spalt vorgesehen, durch den das Heizmedium hindurchtritt. Die Schamottsteine sind folglich an dem Ort angeordnet, an dem bei der Ausführungsform des Standes der Technik der Schwadenapparat vorgesehen war. Die Schamottsteine speichern Wärmeenergie, die auf sie über das Heizmedium übertragen werden und ermöglichen es, die Temperatur in dem Backofen konstant zu halten.

Bei einer alternativen Ausführungsform können ein großflächiges Wärmespeicherelement oder mehrere großflächige Wärmespeicherelemente im Bereich der den Backraum begrenzenden Seitenwand, durch welche das Heizmedium zuströmt, angeordnet sein. Das großflächige Wärmespeicherelement oder die großflächigen Wärmespeicherelemente weisen Durchströmöffnungen auf, welche das Hindurchströmen des Heizmediums ermöglichen.

### Kurze Beschreibung der Zeichnungen

Eine Ausführungsform der Erfindung wird nachfolgend unter Bezugnahme auf die beigefügten Zeichnungen beschrieben.
Fig. 1 zeigt eine Vorderansicht eines erfindungsgemäßen Backofens.
Fig. 2 zeigt eine geschnittene Darstellung des Backofens aus Fig. 1 mit Blick auf die Rückwand.
Fig. 3 zeigt eine geschnittene Draufsicht des erfindungsgemäßen Backofens.
Fig. 4 zeigt eine geschnittene Seitenansicht des Backofens aus den vorangehenden Figuren.

### Ausführungsform(en) der Erfindung

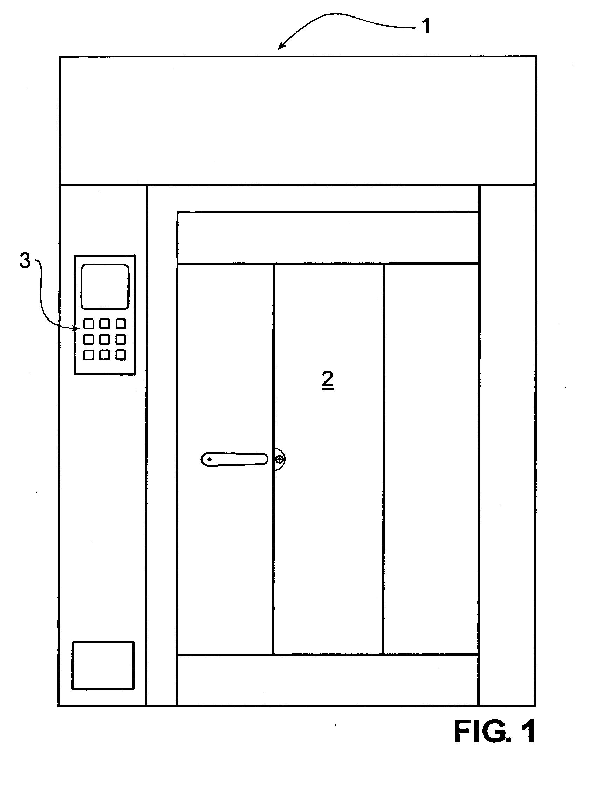

Die Fig. 1 zeigt einen erfindungsgemäßen Backofen, der üblicherweise in Bäckereien oder in Backwarenfabriken verwendet wird. Der Backofen umfasst ein Gehäuse 1 mit einer Tür 2, die während des Backvorgangs verschlossen ist und zum Einbringen und Entnehmen der Backwaren geöffnet werden kann. Die Tür 2 ist etwa zwei Meter hoch und reicht ohne Türschwelle bis zum Boden. So ist sichergestellt, dass durch die Türöffnung bei geöffneter Tür 2 ein Backwagen, auch Stikkenwagen genannt, in den Backraum des Backofens eingeschoben werden kann. In Fig. 1 ist ferner ein Bedienfeld 3 mit einem Anzeigebildschirm zu erkennen. Über das Bedienfeld 3 können Parameter des Backvorgangs (z.B. Dauer, Temperatur, Beschwadung) eingegeben werden, welche anschließend zur Kontrolle über den Anzeigebildschirm des Bedienfelds 3 angezeigt werden.

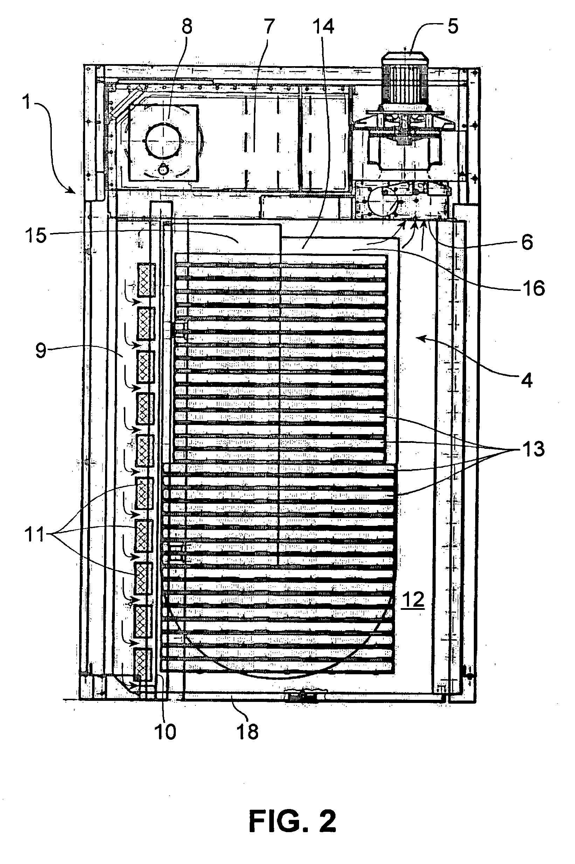

Die Fig. 2 zeigt eine Schnittdarstellung des erfindungsgemäßen Backofens, bei der die Vorderseite mit der Tür weggeschnitten ist. Es sind der Querschnitt des Backraums 4 sowie die wesentlichen für den Backbetrieb erforderlichen funktionalen Elemente zu erkennen. Oben rechts ist in dem Gehäuse 1 des Backofens ist ein Gebläse 5 zu erkennen. Dieses Gebläse 5 saugt ein Heizmedium, welches üblicherweise aus erhitzter Luft besteht, aus dem Backraum 4 durch dessen Deckwand 6 hindurch ab. Im Bereich der Deckwand 6 kann eine Drossel oder ein Schieber vorgesehen sein, um den Strömungsquerschnitt für das abgesaugte Heizmedium zu variieren und so die den Backwaren im Backraum 4 zugefügte Wärmemenge zu beeinflussen.

Von dem Gebläse 5 strömt das Heizmedium durch ein Heizregister 7, das durch einen Brenner 8 erhitzt wird. Der Brenner 8 wird üblicherweise mit Öl oder Gas betrieben. Die so erhitzte Luft strömt anschließend in einen Zufuhrkanal 9, der sich in dem in Fig. 2 links gezeigten Abschnitt des Ofengehäuses 1 befindet. Der Zufuhrkanal 9 erstreckt sich über die gesamte Höhe des Backraums 4 und grenzt an dessen linke Seitenwand 10 an. Direkt neben der linken Seitenwand 10 sind in dem Zufuhrkanal 9 längliche Schamottsteine 11 angeordnet. Diese werden durch das erhitzte Heizmedium auf dessen Temperatur erhitzt. Wenn beispielsweise durch Öffnen der Ofentür und Einbringen neuer Backwaren das Heizmedium abgekühlt wird, sorgt die Wärmespeicherkapazität der Schamottsteine 11 dafür, dass das Heizmedium nach erneutem Schließen der Ofentür schnell wieder die vorgesehene Temperatur erreicht. Die Schamottsteine 11 bilden folglich Wärmespeicherelemente zur Erhitzung des Heizmediums.

Die Schamottsteine 11 sind mit einem Abstand zueinander über die Höhe der linken Seitenwand 10 des Backraums verteilt. Die Spalte zwischen den Schamottsteinen definieren den Strömungsweg des Heizmediums. Die linke Seitenwand 10 des Backraums 4 besteht aus einem Blech mit Durchbrüchen, welche das Eintreten des Heizmediums in den Backraum 4 ermöglichen.

An der in Fig. 2 zu erkennenden Rückwand 12 des Backraums 4 sind Wärmespeicherkörper 13 angeordnet. Die Wärmespeicherkörper 13 werden von länglichen, U-förmigen und nach oben offenen Schwadeneisen gebildet. Eine Wasserzufuhrvorrichtung (nicht dargestellt) ermöglicht die Zufuhr von Wasser zu den Schwadeneisen 13. So wird auf bekannte Weise ein Dampfschwaden in dem Backraum 4 erzeugt, der das Backergebnis positiv beeinflusst.

Die Schwadeneisen 13 befinden sich an der Rückwand des Backraums 4 und somit außerhalb des Strömungswegs des Heizmediums, welches von der linken Seitenwand 10 des Backraums 4 zur oberen rechten Seite der Deckwand 6 des Backraums strömt. Folglich können Ablagerungen oder sonstige Veränderungen an den Schwadeneisen 13 die Strömung des Heizmediums durch den Backraum 4 nicht beeinflussen.

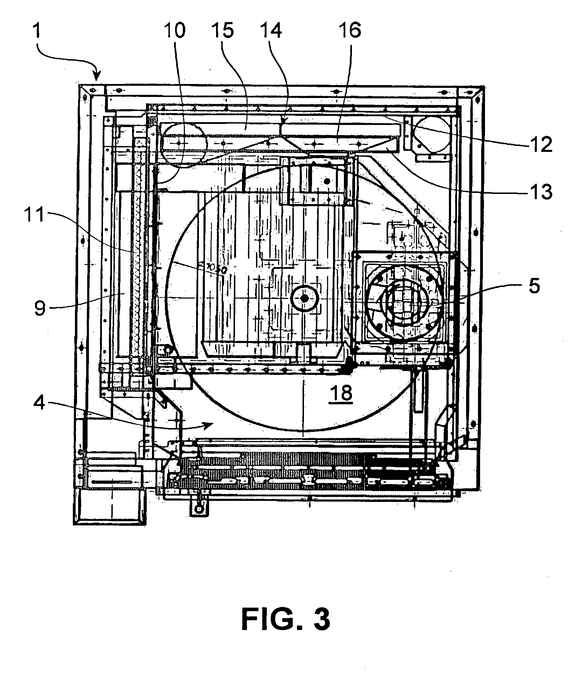

Damit die Schwadeneisen 13 an der Rückwand 12 des Backraums 4 die erforderliche Temperatur erhalten, sind sie an einem Rauchgaskanal 14 im Bereich der Rückwand 12 des Backraums 4 befestigt. Wie insbesondere in Fig. 3 zu erkennen, weist der Rauchgaskanal 14 einen flachen rechteckigen Querschnitt auf und ist U-förmig ausgebildet. Mit anderen Worten besteht der Rauchgaskanal 14 aus zwei nebeneinander liegenden und voneinander getrennten Kanalhälften 15,16, welche im unteren Bereich der Rückwand 12 durch eine U-förmige Kanalumlenkung miteinander verbunden sind. Das Abgas des Brenners 8 strömt durch ein Abgasrohr in die in den Fig. 2 und 3 links liegende Kanalhälfte 15 ein. Es strömt in der Kanalhälfte 15 abwärts bis zur U-förmigen Umlenkung und anschließend aufwärts durch die rechte Kanalhälfte 16. Von hier aus strömt es zu einem Abzug, an dem es aus dem Ofengehäuse 1 austritt. Das Rauchgas kann entweder durch den Überdruck, der bei der Verbrennung entsteht, durch den Rauchgaskanal 14 getrieben werden oder auch abgesaugt werden. Im zweiten Fall kann eine Energie-Rückgewinnungseinheit mit einem Gebläse vorgesehen sein, welche das Rauchgas durch einen leichten Unterdruck aus dem Rauchgaskanal 14 absaugt.

Der Rauchgaskanal 14, an dem die Schwadeneisen 13 befestigt sind, hat insbesondere zwei Vorteile. Zum einen werden die Schwadeneisen 13 auf die erforderliche Betriebstemperatur gebracht. Zum anderen wird das Rauchgas innerhalb des Ofengehäuses 1 weiter abgekühlt und tritt mit einer reduzierten Temperatur aus. Hierdurch erhöht sich die thermische Effizienz des Backofens.

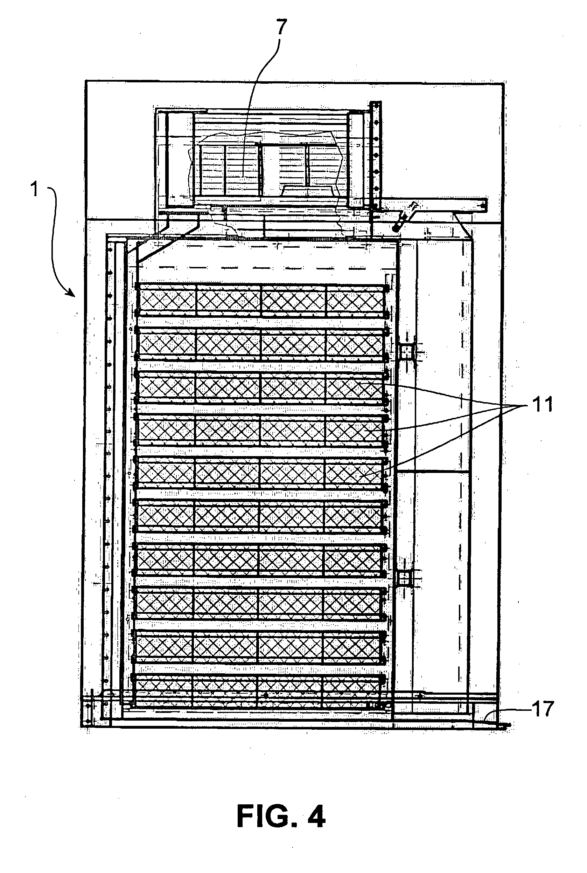

In Fig. 4 ist die Rampe 17 zu erkennen, die das Einrollen eines Backwagens in den Backraum 4 ermöglicht. Ferner zeigen die Fig. 2 und 3 ein Drehteller 18, auf welchen ein Backwagen aufschiebbar ist, damit er während des Backbetriebs gedreht werden kann. Der Drehteller 18 hat einen Durchmesser von über 1 Meter. Der Backwagen kann aber auch ohne Drehteller 18 mit anderen Mitteln gedreht werden.

### Bezugszeichenliste

- 1: Gehäuse
- 2: Tür
- 3: Bedienfeld
- 4: Backraum
- 5: Gebläse
- 6: Deckwand
- 7: Heizregister
- 8: Brenner
- 9: Zufuhrkanal
- 10: Seitenwand
- 11: Schamottstein, Wärmespeicherelement
- 12: Rückwand
- 13: Wärmespeicherkörper, Schwadeneisen
- 14: Rauchgaskanal
- 15: Kanalhälfte
- 16: Kanalhälfte
- 17: Rampe
- 18: Drehscheibe

## Patentansprüche

1. Backofen mit
- einem Ofengehäuse (1), welches einen Backraum (4) zur Aufnahme eines Backwagens aufweist,
- einer Heizvorrichtung (7,8),
- einem Gebläse (5), welches eine Strömung eines Heizmediums von der Heizvorrichtung (7,8) in den Backraum (4) und zurück erzeugt,
- einem Schwadenapparat, der mindestens einen metallischen Wärmespeicherkörper (13) und eine Wasserzufuhrvorrichtung umfasst und der an eine Schwadenheizung angrenzt, die von mindestens einem Abgaskanal (14) gebildet wird, der das Abgas eines Brenners (8) aus dem Ofengehäuse (1) leitet,
- wobei der Schwadenapparat an der Rückwand (12) des Backraums (4) angeordnet ist und der Abgaskanal (14) in der Rückwand (12) des Backraums (4) verläuft,
- **dadurch gekennzeichnet, dass** das Heizmedium durch eine den Backraum begrenzende Seitenwand (10) in den Backraum (4) einströmt, dass im Bereich der den Backraum (4) begrenzenden Seitenwand (10) mindestens ein Wärmespeicherelement (11) angeordnet ist und dass Durchströmöffnungen den Strömungsweg des Heizmediums definieren, wobei die Durchströmöffnungen zwischen den Wärmespeicherelementen (11) vorgesehen sind oder wobei das mindestens eine Wärmespeicherelement die Durchströmöffnungen aufweist.

2. Backofen nach Anspruch 1, **dadurch gekennzeichnet, dass** in der Rückwand (12) des Backraums (4) ein U-förmiger Abgaskanal (14) angeordnet ist.

3. Backofen nach Anspruch 1 oder 2, **dadurch gekennzeichnet, dass** die Wärmespeicherelemente von Schamottsteinen (11) gebildet werden.

4. Backofen nach Anspruch 1, 2 oder 3, **dadurch gekennzeichnet, dass** die Wärmespeicherelemente (11) mit einem Abstand zueinander über die Höhe dieser Seitenwand (10) verteilt sind..

## Claims

1. Baking oven having
- an oven housing (1) which has a baking chamber (4) for receiving a baking carriage,
- a heating device (7, 8),
- a fan (5) which generates a flow of a heating medium from the heating device (7, 8) into the baking chamber (4) and back,
- a steam device which includes at least one metallic heat storage body (13) and a water supply device and which is adjacent to a steam heater which is formed by at least one exhaust gas channel (14) conducting the exhaust gas of a burner (8) out of the oven housing (1),
- wherein the steam device is situated on the back wall (12) of the baking chamber (4) and the exhaust channel (14) runs in the back wall (12) of the baking chamber (4),
- **characterized in that** the heating medium flows into the baking chamber (4) through a side wall (10) delimiting the baking chamber, that at least one heat storage element (11) is situated in the area of the side wall (10) delimiting the baking chamber (4) and that pass-through openings define the flow path of the heating medium, wherein the pass-through openings are provided between the heat storage elements (11) or wherein the at least one heat storage element comprises the pass-through openings.

2. Baking oven according to claim 1, **characterized in that** a U-shaped exhaust gas channel (14) is situated in the back wall (12) of the baking chamber (4).

3. Baking oven according to claim 1 or 2, **characterized in that** the heat storage elements are formed by firebricks (11).

4. Baking oven according to claim 1, 2 or 3, **characterized in that** the heat storage elements (11) are distributed at a distance from one another over the height of this side wall (10).

## Revendications

1. Four, comprenant
- une enceinte de four (1) comportant une chambre de cuisson (4) pour recevoir un chariot de cuisson,
- un dispositif de chauffage (7, 8),
- un ventilateur (5), qui génère un écoulement d'un milieu de chauffage depuis le dispositif de chauffage (7, 8) jusque dans la chambre de cuisson (4), et en sens inverse,
- un appareil à buée comprenant au moins un corps métallique accumulateur de chaleur (13) et un dispositif d'alimentation en eau, et limitrophe d'un chauffage à la vapeur, qui est formé d'au moins un conduit d'échappement (14), qui dirige les gaz d'échappement d'un brûleur (8) à l'extérieur de l'enceinte de four (1),
- dans lequel l'appareil à buée est agencé sur la paroi arrière (12) de la chambre de cuisson (4), et le conduit d'échappement (14) s'étend dans la paroi arrière (12) de la chambre de cuisson (4),
- **caractérisé en ce que** le milieu de chauffage se répand dans la chambre de cuisson (4) à travers un paroi latérale (10) délimitant la chambre de cuisson, **en ce qu'**au moins un élément accumulateur de chaleur (11) est agencé dans la zone de la paroi latérale (10) délimitant la chambre de cuisson (4), et **en ce que** des ouvertures traversantes définissent un chemin d'écoulement du milieu de chauffage, les ouvertures traversantes étant prévues entre les éléments accumulateurs de chaleur (11), ou le au moins un élément accumulateur de chaleur présentant les ouvertures traversantes.

2. Four selon la revendication 1, **caractérisé en ce que** dans la paroi arrière (12) de la chambre de cuisson (4) est agencé un conduit d'échappement en forme de U (14).

3. Four selon la revendication 1 ou 2, **caractérisé en ce que** les éléments accumulateurs de chaleur (11) sont constitués de briques réfractaires.

4. Four de cuisson selon la revendication 1, 2 ou 3, **caractérisé en ce que** les éléments accumulateurs de chaleur (11) sont agencés à une distance les uns des autres sur la hauteur de ladite paroi latérale (10)
